Europäisches Patentamt

European Patent Office

Office européen des brevets

(19)

(11) Veröffentlichungsnummer: **0 242 387 B1**

# EUROPÄISCHE PATENTSCHRIFT

(12)

(45) Veröffentlichungstag der Patentschrift: **27.11.91**

(51) Int. Cl.⁵: **H02P 6/02**, G05D 23/24

(21) Anmeldenummer: **86906266.1**

(22) Anmeldetag: **18.10.86**

(86) Internationale Anmeldenummer:
**PCT/DE86/00421**

(87) Internationale Veröffentlichungsnummer:
**WO 87/02528 (23.04.87 87/09)**

Teilanmeldung 91100798.7 eingereicht am
18/10/86.

(54) **KOLLEKTORLOSER GLEICHSTROMMOTOR, TREIBERSCHALTUNG FÜR EINEN KOLLEKTORLOSEN GLEICHSTROMMOTOR SOWIE VERFAHREN ZUM BETRIEB EINES KOLLEKTORLOSEN GLEICHSTROMMOTORS.**

(30) Priorität: **21.10.85 DE 3537403**

(43) Veröffentlichungstag der Anmeldung:
**28.10.87 Patentblatt 87/44**

(45) Bekanntmachung des Hinweises auf die
Patenterteilung:
**27.11.91 Patentblatt 91/48**

(84) Benannte Vertragsstaaten:
**DE GB**

(56) Entgegenhaltungen:
DE-A- 2 320 531     DE-A- 3 328 370
FR-A- 2 316 780     GB-A- 2 071 939
US-A- 3 668 414     US-A- 3 769 555

(73) Patentinhaber: **PAPST-MOTOREN GMBH & CO. KG**
**Karl-Maier-Strasse 1**
**W-7742 St. Georgen(DE)**

(72) Erfinder: **MÜLLER, Rolf**
**Johann-Georg-Schultheiss-Weg 3**
**W-7742 St. Georgen(DE)**

(74) Vertreter: **Eisenführ, Speiser & Strasse**
**Martinistrasse 24**
**W-2800 Bremen 1(DE)**

## Beschreibung

Die Erfindung betrifft eine Treiberschaltung für einen kollektorlosen Gleichstrommotor, insbesondere zum Antrieb eines Lüfters, der einen wenigstens zweipoligen permanent-magnetischen Rotor, mindestens eine Statorwicklung und mindestens eine Rotorstellungssensorschaltung aufweist; sowie mit mindestens zwei Endstufen, die an die Statorwicklung(en) angeschlossen sind und denen innerhalb jeder durch die Rotorstellungssensorschaltung bestimmten Kommutierungsphase ein rampenförmiger Steuerimpuls zugeführt wird, dessen Dauer und/oder Amplitude zur Steuerung der dem Motor zugeführten Leistung variiert wird.

Eine solche Treiberschaltung ist aus der DE-A-33 28 370 bekannt. Bei dieser Treiberschaltung werden aus den Ausgangssignalen eines Rotorstellungssensors rechteckförmige Steuerimpulse erzeugt, die in den als Integrationsverstärker ausgebildeten Endstufen in trapezförmige Ausgangsimpulse zur Ansteuerung der Wicklungen des Motors umgewandelt werden. Die dem Motor zugeführte Leistung wird dadurch variiert, daß die Vorderflanke der Impulse durch eine variable Verzögerung in ihrem Beginn verstellt wird, um zu verschieden langen Steuerimpulsen und damit Ausgangsimpulsen für die Wicklungen zu gelangen.

Diese bekannte Treiberschaltung hat jedoch den Nachteil, daß für jede Endstufe die Impulsformung zur Ableitung von Dreiecksimpulsen bzw. Trapezimpulsen aus den rechteckförmigen Steuersignalen gesondert vorgesehen sein muß. In dem gezeigten Ausführungsbeispiel sind für die vorgesehenen vier Endstufen vier Integrationsglieder mit Kondensatoren erforderlich, was nicht nur einen erheblichen Aufwand bedeutet, sondern einer Integration einer solchen Treiberschaltung im Wege steht, weil die entsprechenden Zeitgeber-Kondensatoren nicht mitintegriert werden können, sondern als getrennte Bauelemente extern angeschlossen werden müssen.

Weiterhin ist es aus der DE-A-31 07 623 bekannt, die Flankensteilheit von Rechtecksignalen zum Ansteuern der Wicklungen eines Gleichstrommotors durch ein RC-Glied abzuflachen, um die Motorgeräusche zu verringern. Bei einer solchen Treiberschaltung ist jedoch die Möglichkeit zur Verstellung der Drehzahl oder der Leistung für den Motor nicht möglich, es sei denn, man variiert die Betriebsspannung.

Um die Leistung von Gleichstrommotoren bei konstanter Betriebsspannung zu variieren, ist es bekannt, die Impulsbreite des Motorstromes zu verändern. Hierbei wird normalerweise eine niedrige, im Hörfrequenzbereich liegende Impulsfrequenz gewählt, die zwar nur wenig zusätzliche Verlustleistung zur Folge hat und auf benachbarte Geräte wenig Störungen abstrahlt, aber zu dem Nachteil einer erheblichen zusätzlichen Geräuschentwicklung führt. Es ist auch bekannt, die Impulsfrequenz zur Geräuschminderung hoch zu wählen, also oberhalb des Hörbereiches. Dann entstehen jedoch Hochfrequenzstreufelder, die Geräte stören, in denen z.B. die Motoren Lüfter antreiben.

Aus der US-A-3,769,555 ist z.B. eine Treiberschaltung bekannt, bei der das Ausgangssignal eines Impulsgenerators wahlweise über UND-Gatter an Ausgangsschalter durchgeschaltet wird, während andere Ausgangsschalter direkt angesteuert werden. Diese bekannte Treiberschaltung arbeitet jedoch mit reinem Schalterbetrieb der Ausgangsschalter, und zwar mit hochfrequenter Taktung, was zu erheblichen Hochfrequenzstörungen führt. Vermindert man die Taktfrequenz, so ergeben sich lästige Pfeifgeräusche im Betrieb.

Der vorliegenden Erfindung liegt die Aufgabe zugrunde, eine Treiberschaltung für einen kollektorlosen Gleichstrommotor zu schaffen, der mit einem geringen schaltungstechnischen Aufwand auskommt und bei konstanter Betriebsspannung eine Leistungs- oder Drehzahländerung bei niedrigen Leistungsverlusten und geringen Motorgeräuschen ermöglicht. Insbesondere soll die Treiberschaltung integrierbar sein, also auch nur eine geringe Anzahl von externen zusätzlichen Bauelementen benötigen.

Diese Aufgabe wird gemäß der Erfindung dadurch gelöst, daß für mehrere Endstufen ein gemeinsamer Steuerimpulsformgenerator vorgesehen ist, der durch die Ausgangssignale der Rotorstellungssensorschaltung angesteuert wird und pro Kommutierungsphase einen rampenförmigen Steuerimpuls erzeugt; und daß die Endstufen durch die gemeinsam erzeugten rampenförmigen Steuerimpulse in den durch die Ausgangssignale der Rotorstellungssensorschaltung bestimmten Kommutierungsphasen selektiv angesteuert werden.

Die erfindungsgemäße Treiberschaltung soll auch durch entsprechende Schaltungsglieder ergänzt werden können, die in Abhängigkeit von äußeren, erfaßbaren physikalischen Größen die Drehzahl bei konstanter Betriebsspannung steuern oder regeln. Zum Beispiel bei einem Antrieb eines Lüfters durch den bürstenlosen Gleichstrommotor soll es auf diese Weise möglich sein, den Luftstrombedarf z.B. in einem zu kühlenden Gerät, das sich unterschiedlich erwärmt, an die abzuführende Wärme anzupassen. In diesem Falle würde die abzuführende Wärme die externe physikalische Führungsgröße sein, die die Drehzahlregelung bestimmt.

Eine besonders vorteilhafte Ausführungsform der erfindungsgemäßen Treiberschaltung wird derart betrieben, daß die Endstufentransistoren in Abhängigkeit von der geforderten Ausgangsleistung teilweise als analoge Verstärkungselemente und nahe der maximalen Drehzahl oder Leistung als Schalter arbeiten. Hierdurch ergeben sich niedrige Verlustleistungen, so daß eine integrierbare Zusammenfassung der Bauelemente möglich wird. Durch die Kombination von Schalterbetrieb und Analogbetrieb lassen sich insbesondere bei niedriger Drehzahl überraschenderweise sowohl die Verluste in den Endstufentransistoren als auch die elektromagnetischen und akustischen Störungen wesentlich reduzieren.

Weitere Merkmale, Gesichtspunkte, Ausgestaltungen und Vorteile der Erfindung ergeben sich aus den Ansprüchen und der folgenden Beschreibung von in der Zeichnung dargestellten Ausführungsbeispielen.

Es zeigen:

Fig. 1    ein Blockschaltbild zur Veranschaulichung der grundsätzlichen Funktion einer Treiberschaltung gemäß der Erfindung,

Fig. 2    ein Blockschaltbild für ein erstes Ausführungsbeispiel der Treiberschaltung gemäß der Erfindung, und

Fig. 3    eine abgewandelte Ausführungsform.

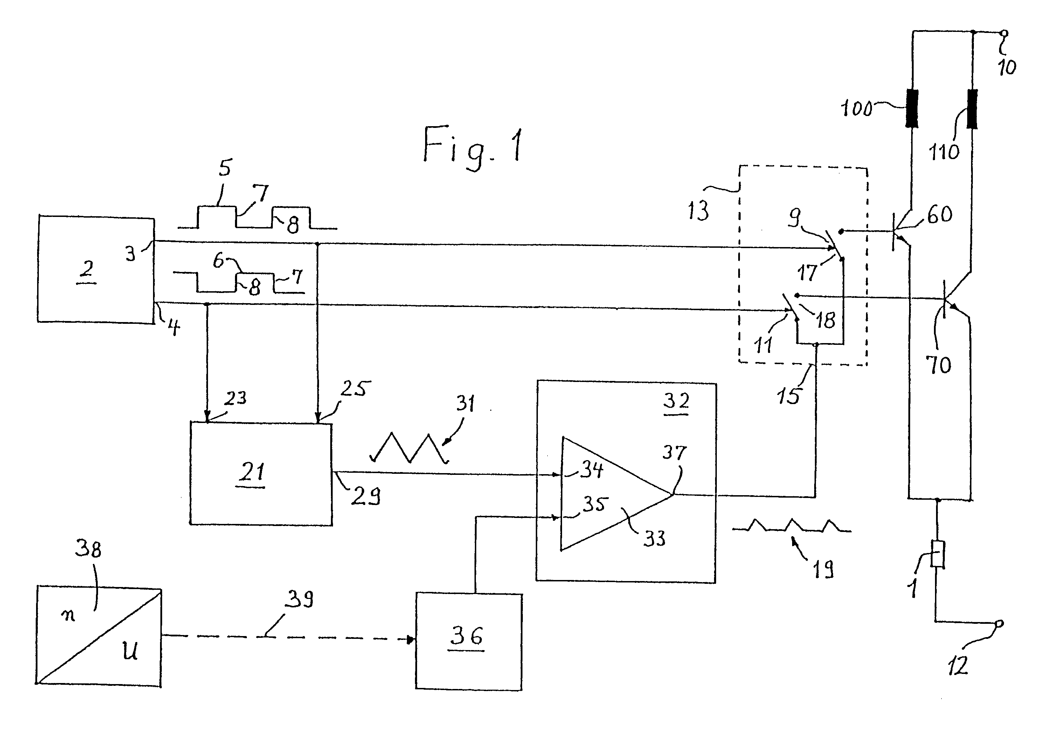

Das in Fig. 1 dargestellte Blockschaltbild zeigt eine Treiberschaltung für einen kollektorlosen Gleichstrommotor mit einer ersten Statorwicklung 100 und einer zweiten Statorwicklung 110. Die Statorwicklungen 100, 110 sind mit ihrem einen Wicklungsende an eine erste Anschlußklemme 10 zur Zuführung der Betriebsspannung des kollektorlosen Gleichstrommotors angeschlossen. Die erste Statorwicklung 100 liegt im Kollektorkreis eines Leistungstransistors 60 der Treiberschaltung, während die zweite Statorwicklung 110 im Kollektorkreis eines Leistungstransistors 70 liegt. Die Emitter der Leistungstransistoren 60, 70, die die Endstufen der Treiberschaltung bilden, sind über einen Gegenkopplungswiderstand 1 mit einer zweiten Anschlußklemme 12 für die Betriebsspannung verbunden. Durch abwechselndes periodisches Ansteuern der Leistungstransistoren 60, 70 werden abwechselnd durch die Statorwicklungen 100, 110 Magnetfelder erzeugt, die den permanentmagnetischen Rotor des kollektorlosen Gleichstrommotors in Drehung versetzen.

Die laufende Drehstellung des in der Zeichnung nicht dargestellten Rotors des Gleichstrommotors wird mit Hilfe einer Sensorschaltung 2 erfaßt, die beispielsweise ein Hallelement enthalten kann, dem ein Verstärker und Impulsformer zugeordnet sind. Entsprechend der Drehung des Rotors treten an den Ausgängen 3, 4 impulsförmige, periodische, um $180°_{el}$ versetzte Sensorsignale 5, 6 auf. Die negativen Flanken 7 der impulsförmigen Sensorsignale 5 liegen zeitlich kurz vor den positiven Flanken 8 der impulsförmigen Sensorsignale 6.

Entsprechend liegen die negativen Flanken 7 des Sensorsignales 6 zeitlich kurz vor den positiven Flanken 8 des Sensorsignals 5.

Wie man in Fig. 1 erkennt, steuern die periodischen Sensorsignale 5, 6 die Leistungstransistoren 60, 70 nicht unmittelbar, wie bei Treiberschaltungen für kollektorlose Gleichstrommotoren üblich, sondern die Ausgänge 3, 4 der Sensorschaltung 2 sind mit Steuereingängen 9, 11 einer Verknüpfungsschaltung 13 verbunden. Die Verknüpfungsschaltung 13 gestattet es, ein am Eingang 15 der Verknüpfungsschaltung 13 anliegendes Endstufensteuersignal 19 in Abhängigkeit von den Signalen an den Steuereingängen 9, 11 wahlweise an die Basis des Leistungstransistors 60 oder die Basis des Leistungstransistors 70 zu legen. Durch die Verknüpfungsschaltung 13 wird für die Ansteuerung der Leistungstransistoren 60, 70 entsprechend den Kommutierungsperioden des Gleichstrommotors jeweils ein Zeitrahmen, nachfolgend auch Kommutierungsphase genannt, festgelegt, der durch die geschlossene Stellung der die Verknüpfungsschaltung 13 symbolisch darstellenden Schalter 17, 18 definiert ist. Wenn beispielsweise der Steuereingang 9 mit einem Impuls des Sensorsignals 5 beaufschlagt wird, schließt der Schalter 17, so daß das am Eingang 15 der Verknüpfungsschaltung 13 anliegende Endstufensteuersignal 19 zur Basis des Leistungstransistors 60 gelangen kann. Wenn eine Impulspause auftritt, öffnet der Schalter 17 und das Endstufensteuersignal 19 ist von einer Einwirkung auf den Leistungstransistor 60 ausgeschlossen. Sobald jedoch über den Steuereingang 11 der Schalter 18 der Verknüpfungsschaltung 13 geschlossen wird, gelangt das Endstufensteuersignal 19 zum Leistungstransistor 70.

Die Treiberschaltung gemäß Fig. 1 ist so ausgelegt, daß die Impulse des ebenfalls impulsförmigen Endstufensteuersignals 19 in ihrer Dauer kleiner sind als die Impulse der Sensorsignale 5, 6. Auf diese Weise ist es möglich, die Ansteuerung der Leistungstransistoren 60, 70 jeweils nur innerhalb eines Teils des durch die Impulse der Sensorsignale 5, 6 vorgegebenen Zeitrahmens durchzuführen. Wenn die am Eingang 15 jeweils anliegenden Impulse gegenüber den an den Steuereingängen 9, 11 anliegenden Impulsen kürzer werden, verkleinern sich die Zeiten, während der durch die Leistungstransistoren 60, 70 und die Statorwicklungen 100, 110 Strom fließt. Die Impulslängen im Endstufensteuersignal 19 gestatten somit eine Beeinflussung des Drehmomentes und/oder der Drehzahl des kollektorlosen Gleichstrommotors. Die Signalform der Impulse des Endstufensteuersignals 19 ist so ausgelegt, daß die vorderen und/oder hinteren Flanken der durch die Statorwicklungen 100, 110 fließenden Ströme abgeflacht sind, so daß Motorgeräusche und Leistungsverluste in den Leistungstransistoren 60, 70 kleinstmöglich gehalten werden.

Zur Erzeugung des Endstufensteuersignals 19 ist gemäß dem in Fig. 1 dargestellten Blockschaltbild ein Rampengenerator 21 vorgesehen, der über zwei Steuereingänge 23, 25 mit den Ausgängen 3, 4 der Sensorschaltung 2 verbunden ist. Der Rampengenerator 21 ist ein Dreieckspannungsgenerator, der an seinem Ausgang 29 eine Dreiecksspannung 31 zur Verfügung stellt, deren Frequenz gegenüber der Frequenz der Sensorsignale 5, 6 verdoppelt ist, d.h., die Periodendauer der Dreiecksspannung entspricht einer Kommuntierungsphase.

Zwischen dem Ausgang 29 des Rampengenerators 21 und dem Eingang 15 der Verknüpfungsschaltung 13 liegt ein Impulsbreitenformer 32. Der Impulsbreitenformer 32 enthält eine vergleichende Verstärkerschaltung, kurz Komparator 33 genannt, dem an einem ersten Eingang 34 die Dreiecksspannung und an einem zweiten Eingang 35 das Ausgangssignal eines Drehzahleinstellungsschaltkreises 36 zugeführt wird. Das Ausgangssignal des Drehzahleinstellungsschaltkreises 36 dient zur Vorgabe eines Schwellenwertes in der Weise, daß am Ausgang 37 immer dann ein Signal auftritt, wenn die Dreiecksspannung 31 oberhalb des jeweils gesetzten Schwellenwertes liegt. Auf diese Weise liefert der Ausgang 37 ein Endstufensteuersignal 19 mit Dreiecksspannungsimpulsen, deren maximale Amplitude und deren Basislängen vom Signal am zweiten Eingang 35 des Komparators 33 abhängig sind. Wenn beispielsweise durch den Drehzahleinstellungsschaltkreis 36 ein kleinerer Schwellenwert gesetzt wird, nähern sich die Flanken des Endstufensteuersignals 19, indem die Impulsform des Endstufensteuersignals 19 sich der Impulsform der Dreiecksspannung 31 annähert, wobei die Basislänge der Impulse und die maximale Amplitude an den Dreiecksspannungsspitzen größer werden.

Wenn das Endstufensteuersignal 19 mit im größeren Abstand voneinander liegenden Dreiecksimpulsen zu den Leistungstransistoren 60, 70 gelangt, steigt der Strom durch die Statorwicklungen 100, 110 entsprechend den ansteigenden Dreiecksflanken an. Dabei schalten die Leistungstransistoren 60, 70 erst dann vollständig durch, wenn die Endstufensteuersignale 19 eine durch die jeweilige Schaltung und die Impedanz der Statorwicklungen 100, 110 vorgegebene Amplitude überschreiten. Bis zum Erreichen dieses Schalterzustandes liegt für die Leistungstransistoren 60, 70 ein Analogbetrieb vor. Nach dem Durchschalten der Leistungstransistoren 60, 70 ändert sich der Stromverlauf durch die Statorwicklungen 100, 110 nur noch geringfügig bis schließlich durch die abfallenden Flanken im Endstufensteuersignal 19 ein langsamer Stromabfall ausgelöst wird.

Durch Verändern der Amplitude des Ausgangssignals des Drehzahleinstellungsschaltkreises 36 ist es somit möglich, die Impulslängen durch die Statorwicklungen 100, 110 innerhalb des durch die Sensorsignale 5, 6 vorgegebenen Zeitrahmens zur Drehzahleinstellung zu verändern.

Wenn es gewünscht ist, die Drehzahl in einem geschlossenen Regelkreis zu regeln, kann, wie in Fig. 1 ebenfalls dargestellt ist, ein Drehzahlsensor 38 vorgesehen sein, der die Drehzahl n des Gleichstrommotors in eine Gleichspannung U umsetzt, die über eine Leitung 39 zum Drehzahleinstellungsschaltkreis 36 gelangt. Es ist dann möglich, eine Drehzahl einzustellen, die mit Hilfe des Drehzahlsensors 38 überwacht wird und beispielsweise bei einer infolge einer größeren Belastung geringer werdenden Drehzahl ein Nachregeln der Drehzahl durch Verändern des Ausgangssignals des Drehzahleinstellungsschaltkreises 36 zu bewirken.

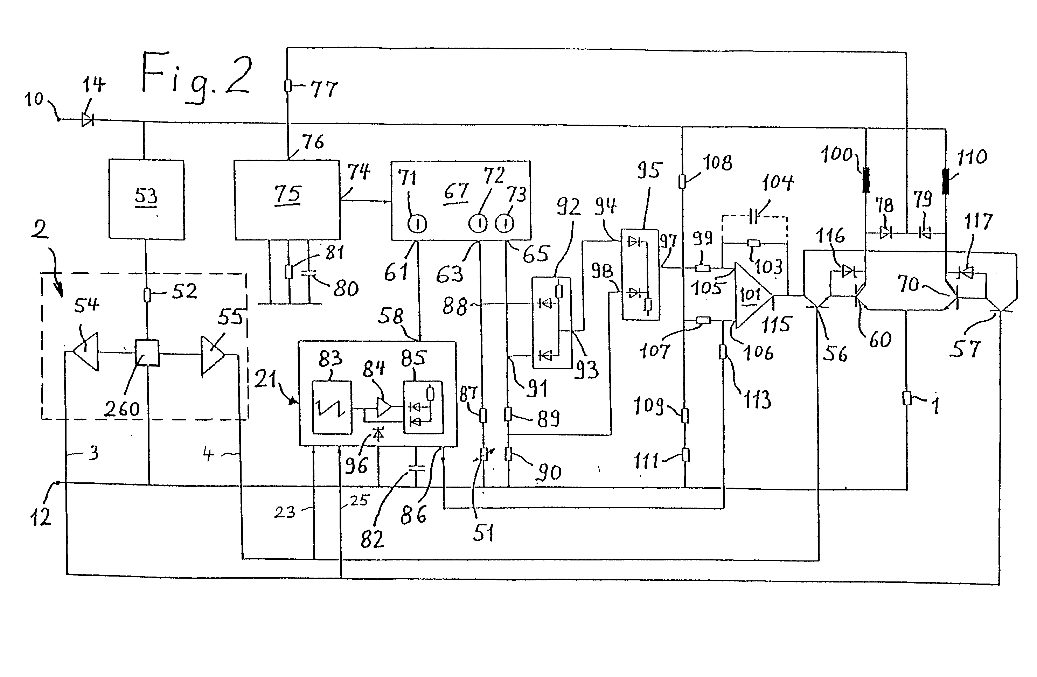

Zur Verdeutlichung einiger Einzelheiten des in Fig. 1 dargestellten Blockschaltbildes für eine erfindungsgemäße Treiberschaltung zeigt Fig. 2 beispielhafte Ausgestaltungen. Dabei sind aus Fig. 1 bereits bekannte Bauteile mit den gleichen Bezugszeichen versehen worden. Die Treiberschaltung gemäß dem in Fig. 2 dargestellten Ausführungsbeispiel dient ebenfalls zur Ansteuerung zweipulsiger, zweisträngiger, kollektorloser Gleichstrommotoren. Eine Veränderung des Drehmoments und/oder der Drehzahl des Gleichstrommotors erfolgt durch Ändern des Verhältnisses der Einschaltdauer zur Abschaltdauer innerhalb jeder Kommutierungsphase, die dem oben erwähnten Zeitrahmen zugeordnet ist. Das Schalten des Motorstroms erfolgt "sanft", um Schaltgeräusche und hochfrequente Störungen soweit wie möglich zu unterdrücken. Aus diesem Grunde arbeiten die Leistungstransistoren 60, 70 während des Einschaltens bzw. Abschaltens zeitweise als lineare Verstärker, die den Strom durch die Statorwicklungen 100, 110 nach einer vorgegebenen Rampenfunktion allmählich mit geringer Flankensteilheit verändern. In der weiter unten näher erörterten Art und Weise wird die Drehzahl des Gleichstrommotors unter Benutzung der in den Statorwicklungen 100, 110 induzierten Spannung durch einen einfachen P-Regler geregelt. Als Führungsgröße der Drehzahl wirken die angelegte Betriebsspannung, der die Drehzahl in etwa proportional ist, und, falls gewünscht, die Umgebungstemperatur, die mit Hilfe eines Meßfühlers erfaßt wird, der einen temperaturabhängigen Widerstand 51, beispielsweise einen NTC-Widerstand enthält.

Die aus Fig. 1 bekannte Sensorschaltung 2 enthält gemäß dem in Fig. 2 dargestellten Ausführungsbeispiel einen Hall-Generator 260, der mit seinem ersten Steuereingang mit der Anschlußklemme 12 und mit seinem zweiten Steuereingang über einen Widerstand 52 und eine Einrichtung für einen thermischen Überlastungsschutz 53 an die über die Anschlußklemme 10 und eine Diode 14 zugeführte Betriebsspannung angeschlossen ist. Die Einrichtung für den thermischen Überlastungsschutz 53 enthält eine Überwachungsschaltung für die Temperatur der Leistungstransistoren 60, 70, um beim Überschreiten der zulässigen Übergangszonentemperatur der Leistungstransistoren 60, 70 mit einer Hysterese ein Abschalten zu gewährleisten.

Der Hall-Generator 260 liefert dem Magnetfeld des Rotors proportionale Spannungen, die über Komparatoren 54 und 55 verstärkt werden, um die in Fig. 1 schematisch dargestellten Sensorsignale 5, 6 zu erzeugen. Die impulsförmigen Sensorsignale 5, 6 werden einerseits einer durch Transistoren 56, 57 gebildeten Verknüpfungsschaltung und andererseits dem Rampengenerator 21 zugeführt. Die Transistoren 56 und 57 entsprechen in ihrer Wirkung den in Fig. 1 dargestellten Schaltern 17 und 18.

Der Rampengenerator 21 ist als Dreiecksspannungsgenerator ausgebildet, der einen Steuereingang 58 aufweist, der mit dem ersten Ausgang 61 eines einen zweiten Ausgang 63 und einen dritten Ausgang 65 aufweisenden Stromgenerators 67 mit drei gesteuerten Stromquellen 71, 72 und 73 verbunden ist. Die Stromquellen 71, 72, 73 werden über eine geglättete Gleichspannung gesteuert, die am Ausgang 74 eines Tiefpassfilters 75 auftritt, das mit seinem Eingang 76 über einen Widerstand 77 und Dioden 78, 79 mit den transistorseitigen Enden der Statorwicklungen 100, 110 verbunden ist. Über die Dioden 78, 79 gelangt eine in den Statorwicklungen 100, 110 induzierte Spannung, die ein Maß für die Drehzahl darstellt, zum Tiefpaßfilter 75, das neben einem Filterkondensator 80 einen externen Festwiderstand 81 aufweist, um die Spannungs-Strom-Wandlung von den absoluten Toleranzen der internen Widerstande der integriesten Schaltung unabhängig zu machen. Da die in Fig. 2 dargestellte Treiberschaltung als integrierter Schaltkreis realisiert ist, verfügen einige Stufen Anschlüsse zur externen Beschaltung wie beispielsweise der erwähnte Filterkondensator 80 oder Festwiderstand 81.

Da das Ausgangssignal am Ausgang 74 des Tiefpaßfilters 75 ein der Drehzahl proportionales Signal ist, werden die Stromquellen 71, 72, 73 entsprechend der Drehzahl des Gleichstrommotors gesteuert.

Die erste Stromquelle 71 dient zum Aufladen eines Kondensators 82, der dem Rampengenerator 21 zugeordnet ist, so daß am Kondensator 82 eine rampenförmige Spannung entsteht. Durch regelmäßiges Entladen des Kondensators 82 mittels der an den Eingängen 23 und 25 anliegenden Ausgangssignale der Sensorschaltung 2 wird in einem Sägezahngenerator 83 eine sägezahnförmige Spannung gebildet. Die Amplitude des Sägezahnsignals des Sägezahngenerators 83 ist damit weitgehend unabhängig von der Drehzahl und der Betriebsspannung. Die Sägezahnspannung wird mit Hilfe eines Inverters 84 in eine gegenläufige Sägezahnspannung umgesetzt. Beide Sägezahnspannungen, die ursprüngliche Sägezahnspannung und die invertierte Sägezahnspannung speisen eine analoge Vergleichsschaltung 85, die am Ausgang 86 jeweils die niedrigere der beiden Spannungen abgibt, wodurch am Ausgang 86 eine dreieckförmige Signalspannung ansteht.

Damit der höchste Punkt des Dreieckspannungssignals annähernd in der Mitte zwischen zwei aufeinanderfolgenden Kommutierungszeitpunkten des Gleichstrommotors liegt und diese Lage unabhängig von der Betriebsspannung ist, ist die den Inverter 84 enthaltende Invertierungsstufe auf ein festes Bezugspotential gelegt, was durch eine Zenerdiode 96 veranschaulicht ist.

Die zweite drehzahlproportional gesteuerte Stromquelle 72 speist eine Serienschaltung aus einem Vorwiderstand 87 und dem als Temperaturmeßfühler dienenden temperaturabhängigen Widerstand 51, der ein Thermistor sein kann und dessen Wirkung über den Vorwiderstand 87 abstimmbar ist.

Der an dieser Serienschaltung auftretende Spannungsabfall stellt ein Maß für die momentane Drehzahl und die momentane Temperatur dar und kann am Schaltungspunkt 88 abgegriffen werden.

Die gesteuerte Stromquelle 73 steuert eine Reihenschaltung aus Festwiderständen 89 und 90. Der am zugeordneten Schaltungspunkt 91 auftretende Spannungsabfall ist ebenfalls der momentanen Drehzahl des Gleichstrommotors zugeordnet, jedoch nicht wie der am Schaltungspunkt 88 vorhandene Spannungsabfall zusätzlich noch temperaturabhängig.

Die Schaltungspunkte 88, 91 sind mit den beiden Eingängen einer Vergleicherstufe 92 verbunden, die an ihrem Ausgang 93 ein Signal abgibt, das dem jeweils niedrigeren Wert an ihren beiden Eingängen zugeordnet ist. Aufgrund der Auswahl des jeweils niedrigeren Wertes wird beim Unterschreiten einer vorgegebenen Grenztemperatur die Drehzahl des Gleichstrommotors nicht weiter abgesenkt, sondern auf einem minimalen Festwert gehalten, der durch die Festwiderstände 89 und 90 festgelegt ist.

Das Ausgangssignal der Vergleicherstufe 92 speist den ersten Eingang 94 einer weiteren Vergleicherstufe 95.

Die weitere Vergleicherstufe 95 dient einerseits dazu, bei Temperaturen oberhalb der unteren Grenztemperatur einen drehzahlgeregelten Betrieb zu ermöglichen. Wie die Vergleicherstufe 92 gibt die weitere Vergleicherstufe 95 an ihrem Ausgang 97 ein Signal ab, das dem jeweils größeren der beiden Eingangssignale entspricht. Als zweites Eingangssignal wird dem zweiten Eingang 98 der Spannungsabfall am Festwiderstand 90 zugeführt. Die weitere Vergleicherstufe 95 dient weiterhin dazu, bei Überschreiten einer gewissen oberen Grenztemperatur ein weiteres Anheben des Regelungsdifferenzsignals zu verhindern, so daß auch bei der höchstmöglichen Drehzahl die Impulse des Endstufensteuerungssignals 19 eine geringere zeitliche Länge aufweisen als die Impulse der Sensorsignale 5, 6 und somit noch eine Steuerung der Rampen an den Leistungstransistoren 60, 70 möglich ist und kein reiner Schalterbetrieb bei den Leistungstransistoren 60, 70 auftritt, was unerwünscht wäre, weil dadurch Laufgeräusche und elektrische Störungen erzeugt würden (siehe auch Fig.1).

Der Ausgang 97 der weiteren Vergleicherstufe 95 ist über einen Widerstand 99 mit einem Vergleichsverstärker 101 verbunden, der als linearer Verstärker mit einem Gegenkopplungswiderstand 103 geschaltet ist, der durch einen Kondensator 104 als Dämpfungselement überbrückt ist und mit dem ersten Eingang 105 in Verbindung steht.

Der zweite Eingang 106 des Vergleichsverstärkers 101 ist über einen Widerstand 107 an eine mit der Betriebsspannungsquelle verbundenen Reihenschaltung aus Widerständen 108, 109, 111 angeschlossen. Der Vergleichsverstärker 101 vergleicht somit die in ihren Grenzwerten beschränkte sowie der Temperatur und/oder der Drehzahl zugeordnete am ersten Eingang 105 anliegende Spannung mit einer über den Widerstand 107 zugeführten Spannung, der jedoch über einen Widerstand 113 die am Ausgang 86 auftretende Dreiecksspannung überlagert ist.

Das Ausgangssignal des Vergleichsverstärkers 101 ist demnach ein dreieckförmiges Spannungssignal, dessen Amplitude und Basislänge von dem Vergleich der Spannungen an den Eingängen 105, 106 abhängen. Mit abnehmender Drehzahl bzw. zunehmender Temperatur wächst die mittlere Amplitude des Ausgangssignals des Vergleichsverstärkers 101, wobei einem veränderbaren Gleichspannungssignal immer ein Dreieckspannungssignal überlagert ist.

Der Vergleichsverstärker 101 wirkt als Drehzahlregler, dessen Verstärkung durch den Widerstand 99 und den Gegenkopplungswiderstand 103 definiert ist. Dabei dient der über den Widerstand 107 zugeführte Spannungsabfall als Sollwert der Drehzahl, dem eine Dreieckspannung zur Bildung einer rampenförmig an- und absteigenden Stromkurve in den Statorwicklungen 100, 110 überlagert wird. Die Steilheit des Stromanstiegs bzw. Stromabfalls ist im wesentlichen durch das Verhältnis der Widerstände 107 und 113 definiert.

Das am Ausgang 115 des Vergleichsverstärkers 101 auftretende Signal wird über die als Analogschalter dienenden Transistoren 56, 57 abwechselnd entsprechend den durch die Kommutierungsphasen definierten Zeitrahmen den Leistungstransistoren 60, 70 zugeführt. Die Transistoren 56, 57 entscheiden dabei jeweils, welcher der beiden Leistungstransistoren 60, 70 das vom Vergleichsverstärker 101 gelieferte Endstufensteuersignal 19 erhält. Wie oben bereits erörtert, erfolgt diese Entscheidung mit Hilfe der Ausgangssignale der Komparatoren 54 und 55.

Um eine analoge Weiterverarbeitung der dreieckförmigen Endstufensteuersignale 19 des Vergleichsverstärkers 101 zu gewährleisten, ist als Gegenkopplungselement der bereits erwähnte Gegenkopplungswiderstand 1 vorgesehen.

Den Leistungstransistoren 60, 70 sind Zenerdioden 116, 117 zugeordnet, die dazu dienen, die maximale Abschaltspannung an den Leistungstransistoren 60, 70 zu begrenzen, so daß auch für den Fall, daß die Rampensteuerung der Leistungstransistoren 60, 70 nicht funktioniert, keine übermäßigen Abschaltspannungen entstehen.

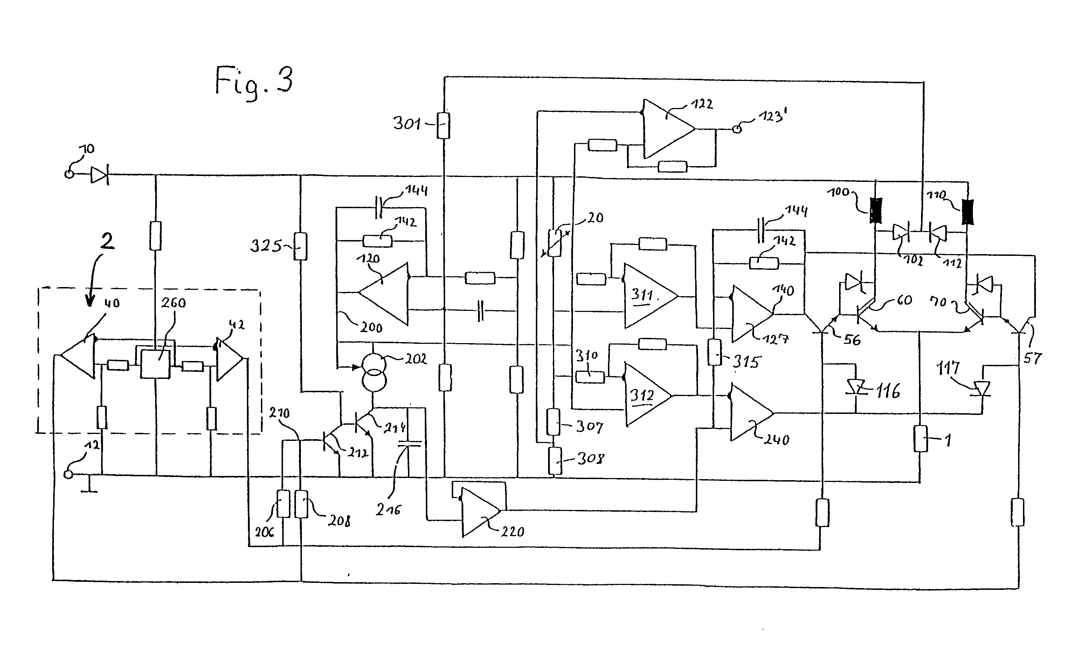

Nachfolgend wird aufbauend auf den Grundprinzipien des in Fig. 1 dargestellten Blockschaltbilds eine weitere Ausführungsform der Erfindung in verbindung und Fig. 3 beschrieben.

Bei dieser Ausführungsform wird ein Impulsignal mit einer Einschaltpause (Einschaltverzögerung) und einer Flankenrampe, entlang welcher eine analoge Regelung stattfindet, durch einen Sägezahngenerator abgeleitet. Am Punkt 210 steht über Widerstände 206 und 208 eine Summen-Signalspannung zur Verfügung, welche lediglich pulsförmig durch die Einschaltpausen der Sensorschaltung 2 unterbrochen ist. Aus diesem Signal wird hinter den Transistoren 212 und 214 mit Hilfe eines einzigen Kondensators 216 ein Sägezahnsignal gewonnen. Nach dem verbleibenden senkrechten Signalspannungsabfall am Anfang jeder Schaltpause wird nach einer sich selbstregelnden Dauer der Pause eine linear bis zur vollen Spannung ansteigende Flanke und damit eine Rampe erzeugt, längs der die analoge Regelung während der Einschaltpause in Abhängigkeit von dem aus dem Soll-Ist-Wertvergleich gewonnenen Signal geführt werden kann. Die Vorgabe kann durch Veränderung der Stromquelle 202 verändert werden. Der Ist-Wert wird über den Ausgang 200 zugeführt. Das mit der Rampe versehene Signal wird über die Operationsverstärker 220 und 240 in den Regelkreis so eingefügt, daß eine Positionierung und Abschaltrampensteigung des Stromimpulses zur Vermeidung von Verlustleistungen verfügbar ist.

Wie man dem in Fig. 3 gezeigten Schaltbild entnehmen kann, wird wiederum mit Hilfe zweier Dioden 102, 112 die in den nichtbestromten Statorwicklungen 100, 110 induzierte Gegen-EMK als Maß für die Drehzahl ausgekoppelt und über einen Widerstand 301 einer Zwischenverstärkerstufe 120 zugeführt, welche durch einen Kondensator 144 als Tiefpaßfilter wirkt. Der Zwischenverstärker 120 steuert die gesteuerte Stromquelle 202, die den Kondensator 216 auflädt, welcher in regelmäßigen Abständen durch den Transistor 214 entladen wird. Zur Entladung des Kondensators 216 ist es erforderlich, daß der Transistor 214 kurzzeitig leitend wird. Dazu dienen Hilfsimpulse, die am Schaltungspunkt 210 auftreten.

Die Erzeugung der Hilfsimpulse erfolgt auf folgende Weise: Der Hall-Generator 260 liefert seine Spannung an zwei Komparatoren 40 und 42, an deren Ausgängen Rechtecksignale entstehen, die um 180° phasenversetzt sind und deren Hoch-Zustände etwas kürzer sind als die Tief-Zustände, so daß durch Summation dieser Signale mit den Widerständen 206 und 208 am Punkt 210 kurzzeitige Tief-Impulse bei jedem Kommutierungstakt entstehen. Dadurch wird der Transistor 212 kurzzeitig abgeschaltet und ermöglicht einen Basisstrom für den Transistor 214 und einen Vorwiderstand 325. Es entsteht am Kondensator 216 eine Sägezahnspannung, deren Amplitude annähernd unabhängig von der Drehzahl ist, da die Ladestromstärke dieses Kondensators der zur Verfügung stehenden Zeit zwischen zwei Kommutierungsimpulsen proportional angepaßt ist. Das drehzahlproportionale Signal, welches am Ausgang 200 des Verstärkers 120 gewonnen wird, wird einem Soll-Ist-Wert-Vergleich zugeführt. Als Soll-Wert dient eine von der Temperatur über den Thermistor 20 abhängig gemachte Spannung eines die Widerstände 307 und 308 enthaltenden Spannungsteilers. Die Mittelpunktspannung dieses Spannungsteilers wird dem nichtinvertierenden Eingang eines Verstärkers 311 und über einen Vorwiderstand 310 dem invertierenden Eingang eines Verstärkers 312 zugeführt. An die jeweils anderen Eingänge der Verstärker wird das der Drehzahl proportionale Signal vom Ausgang 200 zugeführt.

Auf diese Weise entsteht am Ausgang des Verstärkers 311 ein mit zunehmender Temperatur und abnehmender Drehzahl wachsendes Potential und am Verstärker 312 ein mit zunehmender Temperatur und abnehmender Drehzahl abnehmendes Potential. Diese Potentiale werden den ersten Eingängen der Verstärker 127 und 240 zugeführt, an deren zweiten Eingängen das Sägezahnsignal des Inpedanzwandlers 220 anliegt.

Der Verstärker 127 ist als linearer Verstärker geschaltet, wozu der Widerstand 315 und der Widerstand 142 vorgesehen sind. Gedämpft ist der Verstärker durch den Hilfskondensator 144.

Am Ausgang 140 des Verstärkers 127 entsteht ein rampenförmiges Signal, dessen mittleres Potential am Ausgang 140 bei zunehmender Temperatur bzw. abnehmender Drehzahl ansteigt. Diesem mittleren Potential ist das Rampensignal des Ausgangs des Impedanzwandlers 220 invertiert überlagert, so daß mit zunehmender Temperatur, bzw. abnehmender Drehzahl die Endstufenschaltung dazu veranlaßt wird, später nach der Vorgabe einer Rampenfunktion abzuschalten.

Der Verstärker 240 ist als Komparator geschaltet. Er vergleicht das Ausgangspotential des Verstärkers 312 mit dem Sägezahnsignal am Ausgang des Impedanzwandlers 220. Eine Veränderung des Potentials am Ausgang des Verstärkers 312 bewirkt eine Verschiebung des Schaltpunktes des Komparatorverstärkers 240 in dem Sinne, daß mit zunehmender Drehzahl, bzw. abnehmender Temperatur der Ausgang des Verstärkers 240 längere Zeit auf dem Tief-Zustand bleibt, so daß über Dioden 116, 117 und die Transistoren 56, 57 die Endstufenschaltung längere Zeit gesperrt bleibt, bevor sie einschalten kann. Damit wird eine der Drehzahl proportionale und der Temperatur umgekehrt proportionale Pause nach dem Kommutierungstakt eingeführt.

Zusätzlich zur Drehzahlmessung für regelungstechnische Zwecke wird eine zweite Drehzahlmessung durchgeführt, wozu der Komparator 122 vorgesehen ist. Dieser hat als Soll-Wert einen niedrigeren Spannungswert, der mit den Widerständen 307 und 308 erzeugt wird, d.h. dieser Komparator 122 reagiert an seinem Ausgang 123' bei Unterschreitung eines zweiten Soll-Wertes, welcher beliebig vorgebbar ist und als Alarmgrenze dient.

Die Schaltung hat insgesamt die Eigenschaft, daß in Abhängigkeit von der Temperatur und von der momentanen Drehzahl in einem ersten Zeitabschnitt die Endstufentransistoren 60, 70 nicht eingeschaltet werden, d.h. das Einschalten wird nach Maßgabe des Temperatur- und Drehzahlreglers verzögert. Daraufhin werden die Endstufentransistoren 60, 70 für eine gewisse Zeit eingeschaltet. Die Einschaltdauer hängt ebenfalls von der Temperatur und der Drehzahl ab. In einem dritten Zeitabschnitt erfolgt eine Abschaltung der Endstufentransistoren 60, 70 nach einer vorgegebenen Rampenfunktion, wobei die Endstufentransistoren 60, 70 als analoge Elemente verwendet werden und es bleibt ein vierter Zeitabschnitt bis zum nächsten Kommutierungstakt, in dem der andere Endstufentransistor die Möglichkeit hat einzuschalten.

**Patentansprüche**

1. Treiberschaltung für einen kollektorlosen Gleichstrommotor, insbesondere zum Antrieb eines Lüfters, der einen wenigstens zweipoligen permanentmagnetischen Rotor, mindestens eine Statorwicklung (100, 110) und mindestens eine Rotorstellungssensorschaltung (2) aufweist; sowie mit mindestens zwei Endstufen (60, 70), die an die Statorwicklung(en) angeschlossen sind und denen innerhalb jeder durch die Rotorstellungssensorschaltung bestimmten Kommutierungsphase ein rampenförmiger Steuerimpuls zugeführt wird, dessen Dauer und/oder Amplitude zur Steuerung der dem Motor zugeführten Leistung variiert wird, dadurch gekennzeichnet, daß für mehrere Endstufen (60, 70) ein gemeinsamer Steuerimpulsformgenerator (21, 32; 202, 214, 216, 127, 240) vorgesehen ist, der durch die Ausgangssignale der Rotorstellungssensorschaltung (2) angesteuert wird und pro Kommutierungsphase einen rampenförmigen Steuerimpuls erzeugt; und

daß die Endstufen (60, 70) durch die gemeinsam erzeugten rampenförmigen Steuerimpulse in den durch die Ausgangssignale der Rotorstellungssensorschaltung (2) bestimmten Kommutierungsphasen selektiv angesteuert werden.

2. Treiberschaltung nach Anspruch 1, gekennzeichnet durch eine den Endstufen (60, 70) vorgeschaltete Verknüpfungsschaltung (13; 56, 57), der einerseits die gemeinsam erzeugten, rampenförmigen Steuerimpulse und andererseits die Ausgangssignale der Rotorstellungssensorschaltung (2) zum Durchschalten der rampenförmigen Steuerimpulse an die jeweilige Endstufe (60, 70) zugeführt werden.

3. Treiberschaltung nach Anspruch 1 oder 2, dadurch gekennzeichnet, daß der Steuerimpulsformgenerator einen Dreiecksgenerator (21; 202, 214, 216) zur Erzeugung eines Dreieckssignals enthält, dessen Periodendauer etwa einer Kommutierungsphase entspricht, und daß mittels eines Komparators (33; 101; 127, 240) durch Vergleich des Dreieckssignals mit einem Referenzsignal der Zeitpunkt mindestens einer Flanke der rampenförmigen Steuerimpulse festgelegt wird.

4. Treiberschaltung nach Anspruch 3, dadurch gekennzeichnet, daß die Amplitude des Dreieckssignals von der Motordrehzahl weitgehend unabhängig ist.

5. Treiberschaltung nach Anspruch 3 oder 4, bei der der Dreiecksgenerator (83; 202, 214, 216) einen Ladekondensator (82, 216) und eine Ladestromquelle (71, 202) aufweist, dadurch gekennzeichnet, daß der Ladestrom der Motordrehzahl annähernd proportional ist.

6. Treiberschaltung nach Anspruch 5, dadurch gekennzeichnet, daß die Ladestromquelle (71, 202) durch eine Drehzahlsensoranordnung gesteuert wird.

7. Treiberschaltung nach Anspruch 6, dadurch gekennzeichnet, daß die Drehzahlsensoranordnung durch eine Schaltung (78, 79, 75; 102, 112, 301, 120) dargestellt wird, die die Spannung wenigstens einer Statorwicklung (100, 110) im nicht stromdurchflossenen Zustand mißt.

8. Treiberschaltung nach einem der Ansprüche 3 bis 7, mit mindestens zwei Statorwicklungen (100, 110), zwei Endstufen (60, 70) und einer Rotorstellungssensorschaltung (2), die zwei um 180° gegeneinander phasenverschobene Ausgangssignale (5, 6) abgibt, dadurch gekennzeichnet, daß die Rotorstellungssensorschaltung (2) derart ausgebildet ist, daß ihre Ausgangssignale ein Tastverhältnis von etwas weniger als 50% aufweisen, daß die beiden Ausgangssignale (5, 6) zu einem Summensignal addiert (206, 208) werden und daß das Summensignal den Dreiecksgenerator (83; 202, 214, 216) ansteuert.

9. Treiberschaltung nach einem der vorstehenden Ansprüche, dadurch gekennzeichnet, daß in der durch die Rotorstellungssensorschaltung (2) vorgegebenen Kommutierungsphase die Endstufen (60, 70) in einem ersten Zeitabschnitt als Schalter und in einem zweiten Zeitabschnitt als analoge Verstärkerelemente arbeiten, in dem der zuvor eingeschaltete Strom nach einer vorgegebenen Rampenfunktion reduziert wird.

10. Treiberschaltung nach Anspruch 9, dadurch gekennzeichnet, daß das Dreieckssignal in einem Verstärker (127) mit einer Referenzspannung derart verknüpft wird und das Ergebnis die rampenförmigen Steuerimpulse bildet, daß ein Teil der Dreiecksflanke die Abfallflanke der Steuerimpulse bildet.

11. Treiberschaltung nach Anspruch 10, dadurch gekennzeichnet, daß das Dreieckssignal in einem Komparator (240) mit einer Referenzspannung verglichen wird und das Ergebnis zum Verzögern der Anstiegflanke der rampenförmigen Steuerimpulse herangezogen wird.

12. Treiberschaltung nach einem der Ansprüche 3 bis 8, dadurch gekennzeichnet, daß der Dreiecksgenerator (21) aus einem Sägezahngenerator (83) und einer Impulsformerschaltung (84, 85) besteht, die aus einem Sägezahnsignal eine Dreiecksspannung mit einer ansteigenden und abfallenden Flanke ableitet, deren Spitzpunkt annähernd symmetrisch in der Mitte zwischen den beiden Flanken der Dreiecksspannung, und damit auch in der Mitte der Kommutierungsphase, liegt.

13. Treiberschaltung nach Anspruch 12,
dadurch gekennzeichnet, daß die Dreiecksspannung einer Schwellenwertschaltung (33, 101) zugeführt wird, die nur die eine Referenzspannung (35, 105) übersteigenden Signalanteile als rampenförmige Steuerimpulse an die Endstufen (60, 70) abgibt.

14. Treiberschaltung nach Anspruch 10, 11 oder 13,
dadurch gekennzeichnet, daß die Referenzspannungen (35, 105) zur Steuerung der Motorleistung bzw. -drehzahl beeinflußt sind.

15. Treiberschaltung nach einem der Ansprüche 1 bis 14,
dadurch gekennzeichnet, daß die Motordrehzahl durch eine Drehzahleinstellschaltung (36) einstellbar ist.

16. Treiberschaltung nach einem der Ansprüche 1 bis 14,
dadurch gekennzeichnet, daß die Steuerung der Motorleistung bzw. drehzahl durch eine extern vorgebbare physikalische Größe in einer offenen Steuerkette erfolgt.

17. Treiberschaltung nach einem der Ansprüche 1 bis 14,
dadurch gekennzeichnet, daß die Steuerung der Motorleistung bzw. -drehzahl durch eine extern vorgebbare physikalische Größe in einem geschlossenen Regelkreis erfolgt.

18. Treiberschaltung nach Anspruch 16 oder 17,
gekennzeichnet durch einen Temperatursensor (51, 20) zur Beeinflussung der Motorleistung bzw. -drehzahl.

## Claims

1. A driver circuit for a commutatorless d.c. motor, especially
for driving a fan, which exhibits one permanent-magnet rotor of at least two-poles, at least one stator winding (100, 110) and at least one rotor-position sensor-circuit (2), as well as having at least two final stages (60, 70) which are connected to the stator winding(s) and to which within each commutation-phase determined by the rotor-position sensor-circuit is fed a ramp-shaped control pulse the duration and/or amplitude of which is varied for controlling the power fed to the motor, characterized in that for a number of final stages (60, 70) one common control-pulse shape generator (21, 32; 202, 214, 216, 127, 240) is provided, which is energized by the output signals from the rotor-position sensor-circuit (2) and generates one ramp-shaped control pulse per commutation phase; and that
the final stages (60, 70) are energized selectively by the ramp-shaped control pulses generated in common during the commutation phases determined by the output signals from the rotor-position sensor-circuit (2).

2. A driver circuit as in Claim 1,
characterized by a logical circuit (13; 56, 57) which is connected before the final stages and to which are fed at one side the ramp-shaped control pulses generated in common and at the other side the output signals from the rotor-position sensor-circuit (2) for switching the ramp-shaped control pulses through to the respective final stages (60, 70).

3. A driver circuit as in Claim 1 or 2,
characterized in that the control-pulse shape generator contains a triangular generator (21; 202, 214, 216) for the generation of a triangular signal the period of which corresponds with about one commutation phase, and that by means of a comparator (33; 101; 127, 240) through comparison of the triangular signal with a reference signal the instant of at least one flank of the ramp-shaped control pulse is established.

4. A driver circuit as in Claim 3,
characterized in that the amplitude of the triangular signal is largely independent of the motor r.p.m.

5. A driver circuit as in Claim 3 or 4, in which the triangular
generator (83; 202, 214, 216) exhibits a charging capacitor (82, 216) and a source (71, 202) of charging current,
characterized in that the charging current is approximately proportional to the motor r.p.m.

6. A driver circuit as in Claim 5,
characterized in that the source (71, 202) of charging current is controlled by a r.p.m.-sensor arrangement.

7. A driver circuit as in Claim 6,
characterized in that the r.p.m. -sensor arrangement is formed by a circuit (78, 79, 75; 102, 112, 301, 120) which measures the voltage from at least one stator winding (100, 110) in the state with no current flowing through it.

8. A driver circuit as in one of the Claims 3 to 7, having at least
two stator windings (100, 110), two final stages (60, 70) and one rotor-position sensor-circuit (2) which emits two output signals (5, 6) having a 180° phaseshift between them, characterized in that the rotor-position sensor-circuit (2) is so made that its output signals exhibit a keying ratio of rather less than 50 %, that the two output signals (5, 6) are added (206, 208) into a summation signal and that the summation signal energizes the triangular generator (83; 202, 214, 216).

9. A driver circuit as in one of the preceding Claims,
characterized in that during the commutation phase predetermined by the rotor-position sensor-circuit (2) the final stages (60, 70) work as switches during a first period and as analogue amplifier elements during a second period during which the current previously switched on is reduced according to a predetermined ramp function.

10. A driver circuit as in Claim 9,
characterized in that the triangular signal is combined in an amplifier (127) with a reference voltage and the result forms the ramp-shaped control pulses, in such a way that part of the flank of the triangle forms the trailing flank of the control pulses.

11. A driver circuit as in Claim 10,
characterized in that the triangular signal is compared in a comparator (240) with a reference voltage and the result is made use of for delaying the ascending flank of the ramp-shaped control pulses.

12. A driver circuit as in one of the Claims 3 to 8,
characterized in that the triangular generator (21) consists of a sawtooth generator (83) and a pulse-shaper circuit (84, 85) which derives from a sawtooth signal a triangular voltage which has an ascending flank and a trailing flank and the apex of which lies approximately symmetrically in the centre between the two flanks of the triangular voltage and thereby also in the centre of the commutation phase.

13. A driver circuit as in Claim 12,
characterized in that the triangular voltage is fed to a threshold value circuit (33, 101) which emits to the final stages (60, 70) as ramp shaped control pulses only those portions of signal which exceed a reference voltage (35, 105).

14. A driver circuit as in Claim 10, 11 or 13,
characterized in that the reference voltages (35, 105) are influenced for the control of the motor power or r.p.m. respectively.

15. A driver circuit as in one of the Claims 1 to 14,
characterized in that the motor r.p.m. may be set through a r.p.m.-setting circuit (36).

16. A driver circuit as in one of the Claims 1 to 14,
characterized in that the control of the motor power or r.p.m. is effected through an externally predeterminable physical quantity in an open control system.

17. A driver circuit as in one of the Claims 1 to 14,
characterized in that the control of the motor power or r.p.m. is effected through an externally predeterminable physical quantity in a closed control loop.

18. A driver circuit as in Claim 16 or 17,
characterized by a temperature sensor (51, 20) for influencing the motor power or r.p.m.

**Revendications**

1. Circuit d'excitation d'un moteur à courant continu sans collecteur, en particulier pour l'entraînement d'un ventilateur, qui présente un rotor à aimant permanent à au moins deux pôles, au moins un enroulement de stator (100, 110) et au moins un circuit de détection de position de rotor (2), et qui comprend au moins deux étages de sortie (60, 70) qui sont raccordés à (aux) enroulement(s) de stator et par lesquels est fourni, dans chaque phase de commutation déterminée par le circuit de détection de position de rotor, une impulsion de commande en forme de rampe dont la durée et/ou l'amplitude est modifiée pour la commande de la puissance fournie par le moteur, caractérisé en ce que pour plusieurs étages de sortie (60, 70) est prévu un générateur d'impulsions de commande commun (21, 32; 202, 214, 216, 127, 240) qui est excité par les signaux de sortie du circuit de détection de position de rotor (2) et qui produit par phase de commutation une impulsion de commande en forme de rampe, et en ce que les étages de sortie (60, 70) sont excités sélectivement, dans les phases de commutation déterminées par les signaux de sortie du circuit de détection de position de rotor (2), par les impulsions de commande en forme de rampe produites en commun.

2. Circuit d'excitation suivant la revendication 1, caractérisé par un circuit de combinaison (13; 56, 57) qui est raccordé avant les étages de sortie (60, 70) et par lequel sont fournies à l'étage de sortie respectif (60, 70), d'une part, les impulsions de commande en forme de rampe produites en commun et, d'autre part, les signaux de sortie du circuit de détection de position de rotor (2) pour la commutation des impulsions de commande en forme de rampe.

3. Circuit d'excitation suivant l'une ou l'autre des revendications 1 et 2, caractérisé en ce que le générateur de forme d'impulsion de commande comporte un générateur en triangle (21; 202, 214, 216) pour la production d'un signal en triangle dont la durée de période correspond approximativement à une phase de commutation et en ce que le moment d'au moins un flanc des impulsions de commande en forme de rampe est déterminé au moyen d'un comparateur (33; 101; 127, 240) par comparaison du signal en triangle et d'un signal de référence.

4. Circuit d'excitation suivant la revendication 3, caractérisé en ce que l'amplitude du signal en triangle est largement indépendante de la vitesse de rotation du moteur.

5. Circuit d'excitation suivant l'une ou l'autre des revendications 3 et 4, pour lequel le générateur en triangle (83; 202, 214, 216) présente un condensateur de charge (82, 216) et une source de courant de charge (71, 202), caractérisé en ce que le courant de charge est approximativement proportionnel à la vitesse de rotation de moteur.

6. Circuit d'excitation suivant la revendication 5, caractérisé en ce que la source de courant de charge (71, 202) est commandée par un agencement de détection de vitesse de rotation.

7. Circuit d'excitation suivant la revendication 6, caractérisé en ce que l'agencement de détection de vitesse de rotation est représenté par un circuit (78, 79, 75; 102, 112, 301, 120) qui mesure la tension d'au moins un enroulement de stator (100, 110) à l'état non traversé par un courant.

8. Circuit d'excitation suivant l'une quelconque des revendications 3 à 7, comportant au moins deux enroulements de stator (100, 110), deux étages de sortie (60, 70) et un circuit de détection de position de rotor (2) qui délivre deux signaux de sortie (5, 6) déphasés l'un par rapport à l'autre de 180°, caractérisé en ce que le circuit de détection de position de rotor (2) est développé de façon que ses signaux de sortie présentent un rapport de détection de quelque peu moins de 50 %, en ce que les deux signaux de sortie (5, 6) sont additionnés (206, 208) en un signal d'addition et en ce que le signal d'addition excite le générateur en triangle (83; 202, 214, 216).

9. Circuit d'excitation suivant l'une quelconque des revendications précédentes, caractérisé en ce que dans la phase de commutation donnée par le circuit de détection de position de rotor (2) les étages de sortie (60, 70) agissent dans une première section de temps comme commutateurs et comme éléments amplificateurs analogiques dans une seconde section de temps dans laquelle le courant enclenché auparavant est réduit suivant une fonction de rampe donnée.

10. Circuit d'excitation suivant la revendication 9, caractérisé en ce que le signal en triangle est combiné dans un amplificateur (127) à une tension de référence et le résultat forme les impulsions de commande en forme de rampe de façon qu'une partie du flanc de triangle forme le flanc descendant des impulsions de commande.

11. Circuit d'excitation suivant la revendication 10, caractérisé en ce que le signal en triangle est comparé dans un comparateur (240) à une tension de référence et le résultat est acquis pour différer le flanc montant des impulsions de commande en forme de rampe.

12. Circuit d'excitation suivant l'une quelconque des revendications 3 à 8, caractérise en ce que le générateur en triangle (21) est constitué par un générateur en dents de scie (83) et par un circuit de mise en forme d'impulsions (84, 85) qui dérive d'un signal en dents de scie une tension en triangle comportant un flanc montant et un descendant dont le sommet est situé approximativement symétriquement au milieu entre les deux flancs de la tension en triangle et ainsi aussi au milieu de la phase de commutation.

13. Circuit d'excitation suivant la revendication 12, caractérisé en ce que la tension en triangle est fournie à un circuit à seuil (33, 101) qui ne délivre aux étages de sortie (60, 70) en tant qu'impulsions de commande en forme de rampe uniquement les parties de signal dépassant une tension de référence (35, 105).

14. Circuit d'excitation suivant l'une quelconque des revendications 10, 11 et 13, caractérisé en ce que les tensions de référence (35, 105) sont influencées pour la commande de la puissance de moteur ou de la vitesse de rotation de moteur.

15. Circuit d'excitation suivant l'une quelconque des revendications 1 à 14, caractérisé en ce que la vitesse de rotation de moteur peut être réglée par un circuit de réglage de vitesse de rotation (36).

16. Circuit d'excitation suivant l'une quelconque des revendications 1 à 14, caractérisé en ce que la commande de la puissance de moteur ou de la vitesse de rotation de moteur résulte d'une grandeur physique qui peut être donnée à l'avance de l'extérieur, dans une commande en boucle ouverte.

17. Circuit d'excitation suivant l'une quelconque des revendications 1 à 14, caractérisé en ce que la commande de la puissance de moteur ou de la vitesse de rotation de moteur résulte d'une grandeur physique qui peut être donnée à l'avance de l'extérieur, dans une boucle d'asservissement fermée.

18. Circuit d'excitation suivant l'une ou l'autre des revendications 16 et 17, caractérisé par un détecteur de température (51, 20) pour l'influence de la puissance de moteur ou de la vitesse de rotation de moteur.

Fig. 1

EP 0 242 387 B1

Fig.2

Fig. 3